# EUROPEAN PATENT SPECIFICATION

(11) **EP 1 364 815 B1**
(45) Date of publication and mention of the grant of the patent: **22.11.2006**
(21) Application number: 03003868.1
(22) Date of filing: 20.02.2003
(51) Int. Cl.: B60C 25/138

(54) **Quick connection coupling, particularly for attaching tools on turret arm of tyre mounting-dismounting machines**
Schnellkupplung, insbesondere zur Werkzeug-Verbindung am Arm einer Reifenmontagemaschine
Raccordement rapide, en particulier pour la fixation d'outils sur la tourelle de machines de montage / démontage de pneumatiques

(30) Priority: 20.02.2002 IT MO20020045
(43) Date of publication of application: 26.11.2003
(73) Proprietor: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: Feltrinelli, Secondo Andrea

(56) References cited:
- EP-A- 1 167 088
- FR-A- 1 039 212

## Description

### Field of application

The present invention relates to a quick-connection coupling for attaching tools of tyre-dismounting machines, of the type having at least one elongated element which is movable with respect to a stationary column for mounting/dismounting a tyre onto/from a wheel rim.

### Background art

In tyre-dismounting machines, it is necessary, when performing the various operative steps on tyres of vehicle wheels, to replace with a certain frequency the tools which the operators use in each case.

The abovementioned frequency therefore results in the need to have available a quick-connection coupling device, which allows the various replacements to be performed in a quick and easy manner.

As is known, the various tools are mounted on the free end of an elongated element or "pole", which is in turn supported by an arm which extends from a stationary vertical column, or turret, of the tyre-dismounting machine.

The elongated element or arm as a rule has a polygonal - normally hexagonal - cross-section and the arm which supports it is provided with a vertical sleeve which has a cross-section the same as that of the elongated element, so that said elongated element may be inserted slidably therein; the sleeve has a device for locking the sliding movement of the elongated element at heights which may be chosen by the operator, depending on the transverse height of the wheel being worked on, said wheel being in turn clamped on the substantially horizontal underlying rotary platform.

In order to allow the tools to be coupled with the abovementioned free end of the elongated element, said free end is provided with a cylindrical male section which has standardised dimensions and extends from the bottom thereof and on which a corresponding female collar is fitted, said collar also having standardised dimensions which correspond to the preceding dimensions and which all the tools which are provided or may be used on a tyre-dismounting machine possess.

The abovementioned collar is also provided with a clamping device which fastens it to the cylindrical section so as to make it integral with the elongated element and so that it may be used by the operator.

A tool for mounting and removing tyres onto and from respective wheel rims is known from EP 1167088 according to which a profiled body is mounted on a cylindrical shank provided at the end of a tool holder bar associated with a tyre removal machine.

The body has two active portions, known as a blade and head respectively, extending from two parts comprising coaxial hubs mounted on the cylindrical shank.

The two parts are coupled together such that their orientation can be adjusted and one of the hubs is provided with means for torsionally locking it to the shank.

However, it has been observed that the systematic replacement of the work tools and, in particular, the stresses to which they are subjected, which are normally in a composite axial/transverse direction and are exerted on the elongated element, lead to the occurrence of play between the abovementioned cylindrical male section and the collars of the tools as a result of progressive deformation between the surfaces which are in mutual contact during coupling, said play increasing with use until the entire elongated element needs to be replaced.

In addition to the above, it should also be considered that the elongated element, despite being standard in its general form, is not so standard in dimensions, as these vary depending on the manufacturer of the tyre-dismounting machines and the models thereof.

A coupling device for mounting tools on a milling machine is also known from FR-A-1039212.

Therefore, in order to be able to satisfy the need to replace the abovementioned elongated element, it is necessary to be able to provide a wide range of models thereof and, therefore, a store which must also be well stocked.

Said state of the art results in drawbacks of a cost-related nature, because of the periodic need to replace the elongated element of the tyre-dismounting machines, and also of an organisational nature, because of the need to maintain a store of spares ready for each operation.

### Disclosure of the invention

The purpose of the present invention is that of eliminating the abovementioned drawbacks of the prior art by devising a quick-connection coupling for attaching tools on the elongated element of tyre-dismounting machines which is substantially non-deformable and also allows the partial elimination of any play in the couplings between the elongated element and the work tools.

A further object of the present invention is that of allowing work tools to be adapted to elongated elements of different dimensions, reducing the need to maintain a store of spare parts.

This purpose and these objects are all achieved by a tyre dismounting machine according to claim 1.

### Brief disclosure of the drawings

Further characteristic features and advantages of the present invention will emerge more clearly from the detailed description of a preferred but not exclusive embodiment of a quick-connection coupling, particularly for tools of tyre-dismounting machines, illustrated by way of a non-limiting example in the attached plates of drawings in which:

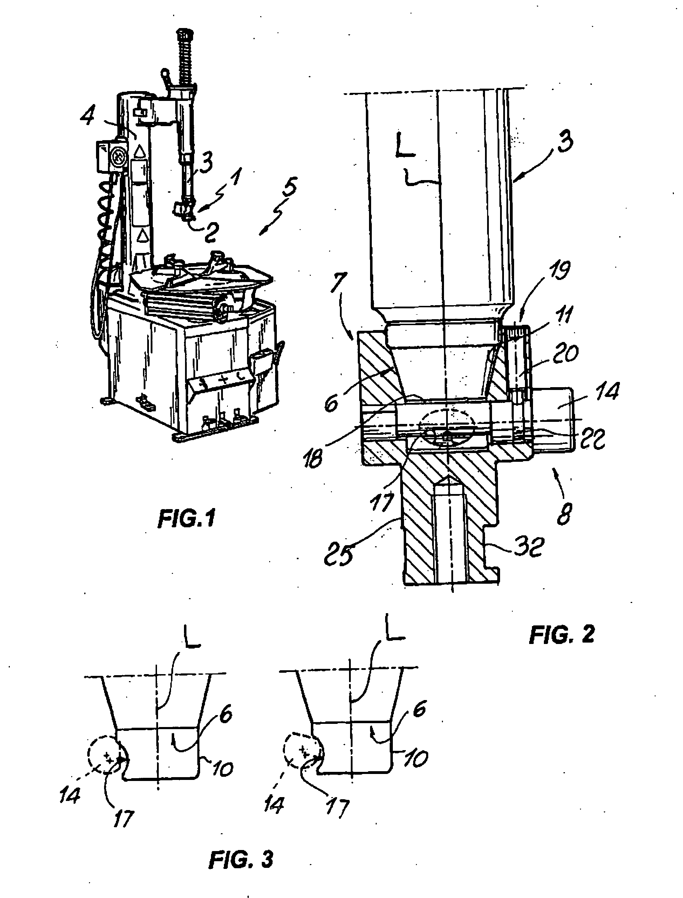

Fig. 1 shows a generic tyre-dismounting machine in which the position of the elongated element and a work accessory mounted thereon may be seen;
Fig. 2 shows, in partial vertical cross-section and on an enlarged scale, a detail of the quick-connection coupling for attaching tools of tyre-dismounting machines according to the present invention and in the configuration for supporting a tool;
Fig. 3 is a schematic view of a detail of the quick-connection coupling according to the present invention in two successive steps showing the fastening of a tool;
Fig. 4 is an exploded view of a first example of embodiment of the quick-connection coupling according to the invention;
Fig. 5 shows, in schematic longitudinal cross-section, a second example of embodiment of a quick-connection coupling according to the invention which is able to be fitted also on tyre-dismounting machines provided with an elongated element of the conventional type;
Fig. 6 shows, in schematic longitudinal cross-section, a third example of embodiment of an adaptor which forms the quick-connection coupling according to the invention and is able to be fitted also on tyre-dismounting machines provided with an elongated element of the conventional type.

### Detailed description of a preferred embodiment

With particular reference to the abovementioned figures, a quick-connection coupling according to the invention, denoted in its entirety by reference number 1, is intended to mount tools 2 on an elongated element 3 which has a longitudinal axis "L" and is movable with respect to a stationary column 4 of a tyre-dismounting machine 5.

The quick-connection coupling 1 comprises at least two elements 6 and 7, which are respectively male and female and have conical profiles or, in the preferred embodiment described below, frustoconical profiles, and are each integral with the elongated arm element 3 and the tools 2 respectively, or also vice versa.

The female element 7 is provided with clamping means 8 which are intended to lock the male element 6 in a coupling configuration and are able to lock the two elements integrally together.

The male element 6 has a tapered portion 9 which has an external profile defining the abovementioned conical or frustoconical profile and is connected to a substantially cylindrical, longitudinal, extension piece 10.

The female element 7 also has an internal profile 11 defining the abovementioned conical or frustoconical profile and comprises, at a tapered end 12, a longitudinal cavity 13 able to receive the extension piece 10 of the male element 6.

The clamping means 8 comprise a substantially cylindrical key 14 which is inserted into a transverse through-hole 15 of the female element 7 - said through-hole having a widened central portion 16 - and may be engaged selectively in a cavity 17 of the male element 6 so as to lock selectively the female element 7 with respect to the male element 6.

In particular, the extension piece 10 may be positioned inside the longitudinal cavity 13 when the male element 6 is coupled with the female element 7. Moreover, the cavity 17 is positioned in the extension piece 10 and the transverse hole 15 is formed in the longitudinal cavity 13. In this way, an eccentric portion 18 of the cylindrical key 14, which may be positioned in the widened portion 16 of the transverse hole 15, may be engaged selectively by means of rotation in the cavity 17 and cause the selective locking between the male element 6 and the female element 7.

The clamping means 8 are also provided with means 19 for locking the rotation of the cylindrical key 14, formed essentially by a dowel 20, which may be screwed into a respective threaded seat 21 formed transversely in the female element 7 and has the tip emerging inside the transverse hole 15 so as to engage in a peripheral groove 22 formed correspondingly in the key 14; the abovementioned dowel 20 may also have at its tip a compression spring 23, which acts, at the opposite end, on a ball 24 able to be coupled with the abovementioned groove 22.

In a first preferred example of embodiment of the quick-connection coupling 1, the male element 6 forms one piece with the elongated element 3, while the female element 7 comprises a lug 25 which may be coupled with a complementary seat 26 of the tool. Bottom fastening means are also envisaged so as to lock selectively the female element 7 and the tool 2, said means comprising, for example, a washer 27 and an anchoring screw 28, which may be screwed into a corresponding longitudinal threaded hole 29 formed in the lug 25, or a transverse anchoring screw 30, which may be screwed into a transverse hole 31 of the tool 2 and may be engaged by means of friction in a counter-shaped seat 32 of the lug 25.

A second preferred example of embodiment of the quick-connection coupling 1 according to the present invention may be advantageously used in tyre-dismounting machines 5 provided with an elongated element 3 of the standard type, i.e. provided with a standardised cylindrical end 33, without necessarily having to envisage the replacement thereof.

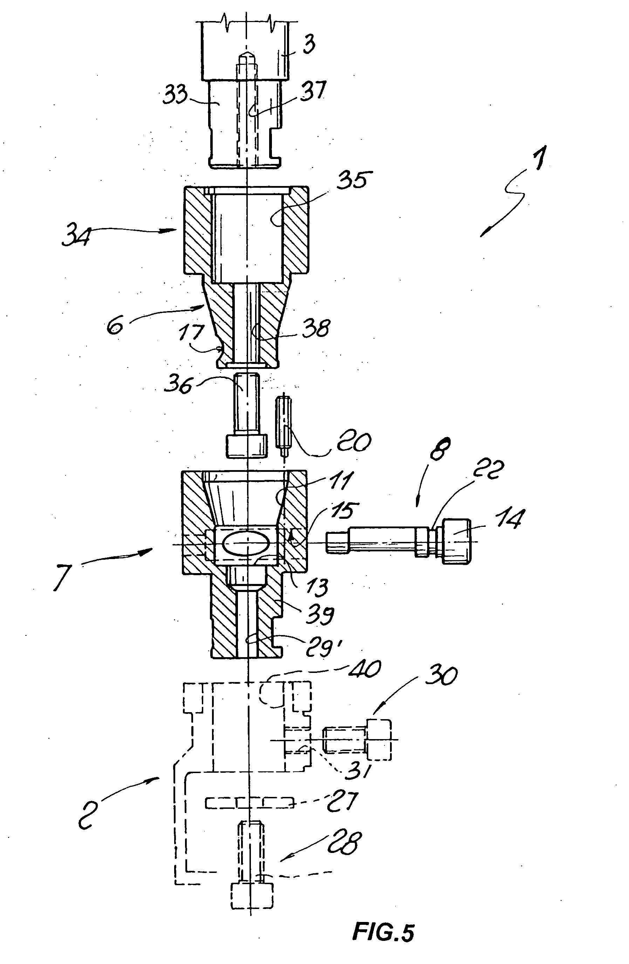

In this second example of embodiment, illustrated in schematic form in Fig. 5, the male element 6 is formed on a first adaptor element 34 comprising a cylindrical socket 35 able to be coupled with the standardised cylindrical end 33 of the elongated element 3.

Top fastening means are also envisaged so as to lock the first adaptor element 34 and the elongated element 3 respectively and selectively. In particular, said top fastening means may comprise, for example, an anchoring screw 36, which may be screwed into a corresponding longitudinal threaded hole 37 and passes through a longitudinal through-hole 38 of the first adaptor element 34.

As in the first preferred example of embodiment, the female element 7 has, on its bottom portion, a lug 39 which may be coupled with a complementary seat 40 of the tool 2.

Bottom fastening means are envisaged so as to lock selectively the female element 7 and the tool 2, which are similar in every way to the means 27, 28, 30, 31 according to the first example of embodiment.

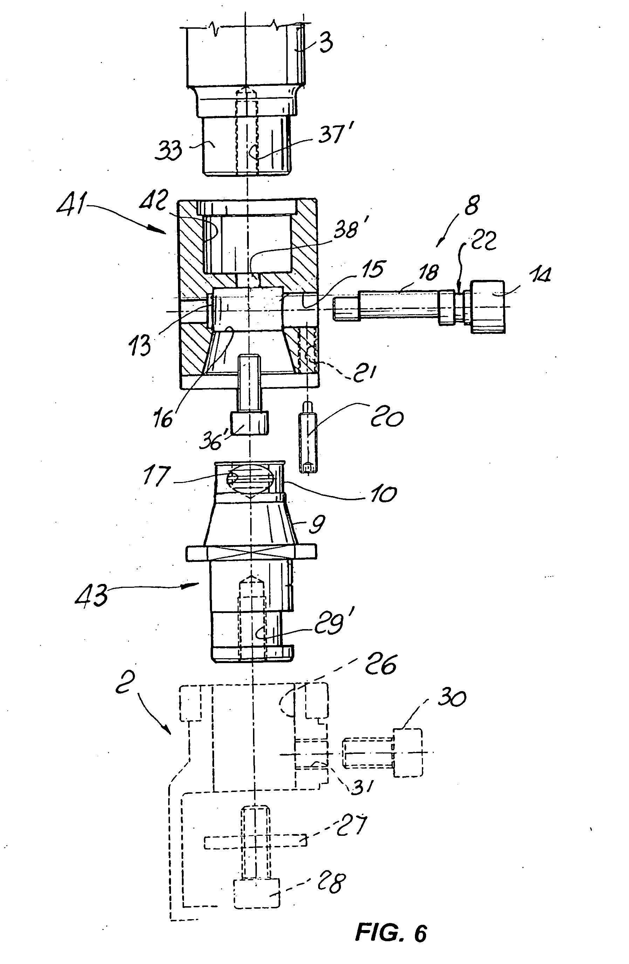

In the case where the elongated element 3 is provided with the standardised cylindrical end 33, a third example of embodiment, which is illustrated in schematic form in Fig. 6 and in which the male element 6 is integral with the tool 2, may advantageously be used.

In this case, the female element 7 is formed on a second adaptor element 41 comprising a hollow cylindrical portion 42 able to receive the standardised cylindrical end 33 of the elongated element 3.

The anchoring between said elements may be achieved with top fastening means, which are similar to those already described in the preceding embodiment and in particular comprise a screw 36', which may be screwed into a hole 37' of the elongated element 3 and passes through an axial hole 38' formed in the second adaptor element 41.

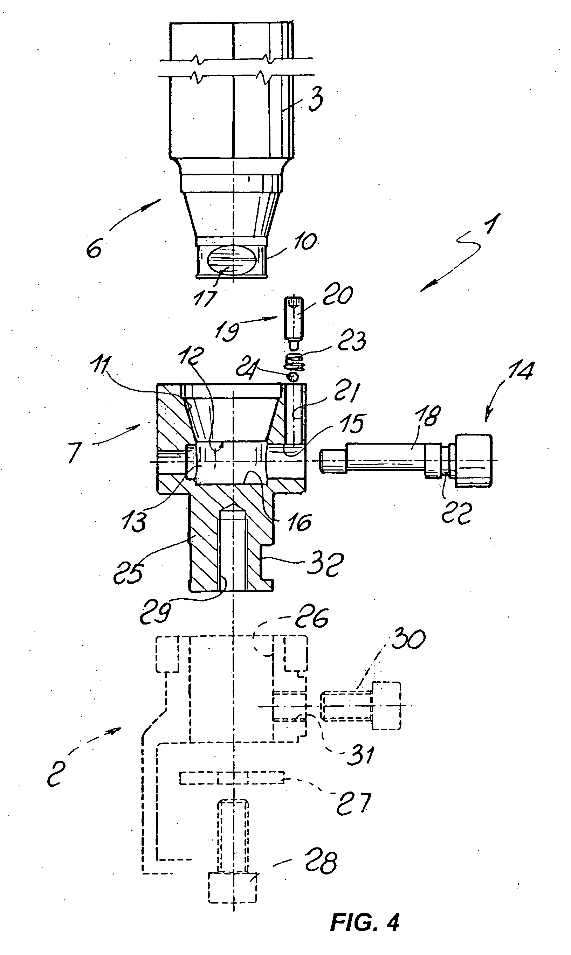

Advantageously, the male element 6 may form one piece with the connecting element 43, which may be coupled with the tool 2 by means of bottom fastening means, which are also similar in every way to the means 27, 28, 30, 31 according to the first example of embodiment, illustrated in schematic form in Fig. 4.

This embodiment also has clamping means 8 so as to lock together selectively the male element 6 and the female element 7, which are identical in every way to the similar clamping means 8 used in the preceding embodiments.

The operating principle of the invention, be it for the quick-connection coupling 1, be it in the case where the male element 6 forms one piece with the elongated element 3 or be it according to the second and third examples of embodiment, is described below.

In the first example of embodiment, the tool 2 is mounted on the lug 20 of the female element 7, which in turn is coupled with the male element 6, which forms one piece with the elongated element 3.

The key 14 is then turned until the eccentric portion 18 engages in the cavity 17 of the extension piece 10 of the male element 6.

The rotation of the key 14 also generates an additional thrusting action, which is capable of keeping the male and female elements 6 and 7 coupled securely together.

In this way, the tool 2 is mounted on the elongated element 3 securely and quickly and, owing to the mutually coupled conical profiles and the abovementioned additional thrust of the key 14, is completely without play with respect thereto.

In the case where the elongated element 3 is of the standard type, i.e. provided with a standardised cylindrical end 33, the first adaptor element 34 is applied first on the elongated element 3, introducing the standardised cylindrical end 33 into the corresponding cylindrical socket 35 and locking it by screwing the anchoring screw 36 into the longitudinal threaded hole 37.

Coupling of the female element 7 with the male element 6 and mutual locking by means of the clamping means 8 are then performed. In this case too the tool 2 is coupled and locked to the lug 39 of the female element 7 by means of at least one anchoring screw 28, 30.

It should be noted that, in order to prevent the spontaneous rotation of the key 14, the respective dowel 20 of the threaded seat 21 is tightened until it comes into contact with the key 14.

Lastly, in the third preferred example of embodiment, the second adaptor element 41 is applied first on the elongated element 3 first, introducing the standardised cylindrical end 33 into the corresponding hollow cylindrical portion 42' and locking it with the screw 36' being screwed into the threaded hole 37' and passing through the hole 38' of the second adaptor element 41.

Then, coupling of the female element 7 and the male element 6, which forms one piece with the connecting element 43, and locking together by means of the clamping means 8 is performed. In this case, the tool 2 is engaged and locked to the connecting element 43 by means of the connecting screw 28, 30.

It has been observed in practice that the invention described achieves the proposed objects.

The invention thus conceived may be subject to numerous modifications and variations, all of which fall within the protective scope as defined by the content of the claims.

Moreover, all the details may be replaced by other technically equivalent details.

In practice, the materials used, as well as the forms and dimensions, may be of any type according to the requirements, without thereby departing from the protective scope of the present invention.

## Claims

1. A tyre dismounting machine (5) of the type having at least one elongated element (3) having a longitudinal axis (L) which is movable with respect to a stationary column (4) for mounting/dismounting a tyre onto/from a wheel rim, comprising a quick-connection coupling (1) suitable for mounting/dismounting tools (2) onto/from said at least one elongated element (3), said quick-connection coupling (1) further comprising at least one male element (6) and at least one female element (7), which may be coupled respectively with said elongated element (3) and with at least one of said tools (2) along said longitudinal axis (L), **characterized in that** said male element (6) and said at least one female element (7) have complementary conical and/or frustoconical profiles.

2. A tyre dismounting machine (5) according to claim 1, **characterized in that** it comprises clamping means (8) so as to lock together selectively said male element (6) and said female element (7) in a predetermined axial and angular position with respect to said longitudinal axis (L).

3. A tyre dismounting machine (5) according to claim 1, **characterized in that** said male element (6) comprises a tapered portion (9) which has an external profile defining said conical or frustoconical profile and is connected to a substantially cylindrical, longitudinal, extension piece (10).

4. A tyre dismounting machine (5) according to claim 3, **characterized in that** said female element (7) has an internal profile (11) defining said conical or frustoconical profile and comprises, at one tapered end (12), a longitudinal cavity (13) able to receive said extension piece (10) of said male element (6).

5. A tyre dismounting machine (5) according to claim 4, **characterized in that** said clamping means (8) comprise a substantially cylindrical key (14) which is insertable into a transverse hole (15) of said female element (7) and may be selectively engaged in a cavity (17) of said male element (6) so as to selectively lock said female element (7) with respect to said male element (6).

6. A tyre dismounting machine (5) according to claim 5, **characterized in that** said cavity (17) is located in said extension piece (10), said cylindrical key (14) comprising an eccentric portion (18) able to be selectively engaged by means of rotation in said cavity (17), when said cavity is inside said longitudinal cavity (13).

7. A tyre dismounting machine (5) according to claim 6, **characterized in that** said clamping means (8) comprise means (19) for locking the rotation of said cylindrical key (14).

8. A tyre dismounting machine (5) according to claim 7, **characterized in that** said locking means (19) comprise at least one dowel (20) which may be screwed into a corresponding threaded seat (21) of said female element (7) so as to interfere selectively with said cylindrical key (14).

9. A tyre dismounting machine (5) according to one or more of claims 1 to 8, **characterized in that** said male element (6) forms one piece with the elongated element (3).

10. A tyre dismounting machine (5) according to one or more of claims 1 to 8, **characterized in that** said female element (7) comprises a lug (25), which may be coupled with a complementary seat (26) of a tool (2), bottom fastening means being envisaged so as to lock together selectively said female element (7) and the tool (2).

11. A tyre dismounting machine (5) according to one or more of claims 1 to 8, **characterized in that** said male element (6) is formed on a first adaptor element (34) which has a cylindrical chamber (35) able to be coupled with the elongated element (3), top fastening means being envisaged so as to lock selectively said first adaptor element (34) and the elongated element (3).

12. A tyre dismounting machine (5) according to one or more of the preceding claims, **characterized in that** said top and bottom fastening means comprise at least one respective anchoring screw (28, 30, 36, 36'), which may be screwed into a corresponding longitudinal or transverse threaded hole (29, 31, 37, 37').

13. A tyre dismounting machine (5) according to one or more of claims 1 to 8, **characterized in that** said male element (6) may be coupled with the tool (2).

14. A tyre dismounting machine (5) according to claim 13, **characterized in that** said female element (7) is formed on a second adaptor element (41) comprising a hollow cylindrical portion (42) able to receive a complementary end portion (33) of the elongated element (3).

15. A tyre dismounting machine (5) according to claim 14, **characterized in that** said male element (6) is formed on a connecting element (43) which may be coupled with the tool (2).

## Patentansprüche

1. Reifenmontagemaschine (5), die mindestens ein sich entlang einer zentralen Achse (L) erstreckendes, längliches Element (3) hat, das zum Zweck der Montage/Demontage eines Reifens auf eine/von einer Radfelge relativ zu einer fest stehenden Säule (4) bewegbar ist, mit einer zum Ansetzen/Abnehmen von Werkzeugen (2) an das/von dem mindestens einen länglichen Element geeigneten Schnellkupplung (1), die des weiteren mindestens ein männliches Element (6) und mindestens ein weibliches Element (7) umfasst, die, entlang der Längsachse (L) gesehen, mit dem länglichen Element, einerseits, und andrerseits, mit mindestens einem der Werkzeuge koppelbar sind, **dadurch gekennzeichnet, dass** das männliche Element (6) und das mindestens eine weibliche Element (7) komplementäre kegelige oder kegelstumpfförmige Profile haben.

2. Reifenmontagemaschine (5) nach Anspruch 1, **dadurch gekennzeichnet, dass** eine Klemmvorrichtung (8) vorgesehen ist, mittels derer selektiv das männliche Element (6) und das weibliche Element (7) gesehen in Richtung der Längsachse (L), in einer vorbestimmten axialen und azimutalen Position verankerbar sind.

3. Reifenmontagemaschine (5) nach Anspruch 1, **dadurch gekennzeichnet, dass** das männliche Element (6) einen sich verjüngenden Abschnitt (9) hat, dessen Außenprofil das kegelförmige oder kegelstumpfförmige Profil bildet und mit einem im wesentlichen zylindrischen, longitudinalen Verlängerungsstück (10) verbunden ist.

4. Reifenmontagemaschine nach Anspruch 3, **dadurch gekennzeichnet, dass** das weibliche Element (7) mit einer inneren Profilierung (11) das kegelige oder kegelstumpfförmige Profil bildet und an einem verjüngten Ende (12) longitudinale Kammer (13) umfasst, die das Verlängerungsstück (10) des männlichen Elements (6) aufnimmt.

5. Reifenmontagemaschine nach Anspruch 4, **dadurch gekennzeichnet, dass** die Klemmvorrichtung (8) einen im wesentlichen zylindrischen Schlüssel (14) umfasst, der in eine quer verlaufende Ausnehmung (15) des weiblichen Elements (7) einführbar ist und selektiv mit einer Aushöhlung (17) des männlichen Elements (6) in Angriff bringbar ist, derart, dass das weibliche Element (7) selektiv am männlichen Element (6) festlegbar ist.

6. Reifenmontagemaschine (5) nach Anspruch 5, **dadurch gekennzeichnet, dass** der Hohlraum (17) innerhalb des Verlängerungsstückes (10) angeordnet ist, wobei der zylindrische Schlüssel (14) an einen Exzenter abschnitt (18) hat, der gezielt mit einem in der Kammer drehbaren Verankerungsteil in Eingriff bringbar ist, wenn der Hohlraum innerhalb des in Längsrichtung sich erstreckenden Hohlraums (13) angeordnet ist.

7. Reifenmontagemaschine nach Anspruch 6, **dadurch gekennzeichnet, dass** die Klemmeinrichtung (8) mit einer Sperre (19) versehen ist, mit der ein drehendes zylindrischen Schlüssels (14) verhinderbar ist.

8. Reifenmontagemaschine nach Anspruch 7, **dadurch gekennzeichnet, dass** die Sperreinrichtung (19) mindestens einen Pass-Stift (20) umfasst, der in einen entsprechenden Gewindesitz (21) des weiblichen Elements (7) einschraubbar ist und selektiv mit dem Zylinderschlüssel (14) in Wirkverbindung steht.

9. Reifenmontagemaschinen nach einer der Ansprüche 1 bis 8, **dadurch gekennzeichnet, dass** das männliche Element (6) mit dem länglichen Element (3) einstückig ausgeführt ist.

10. Reifenmontagemaschine nach einem der Ansprüche 1 bis 8, **dadurch gekennzeichnet, dass** das weibliche Element (7) einen Ansatz (25) hat, der mit einem komplementären Sitz (26) eines Werkzeuges koppelbar ist, wobei bodenseitig Befestigungsmittel vorgesehen sind, mittels derer selektiv das weibliche Element (7) und das Werkzeug (2) aneinander festlegbar sind.

11. Reifenmontagemaschine (5) nach einem der vorhergehenden Ansprüche 1 bis 8, **dadurch gekennzeichnet, dass** das männliche Element (6) an einem ersten Adapterelement (34) angeordnet ist, dass eine zylindrische Kammer (35) hat, die mit dem länglichen Element (3) koppelbar ist, und das an der Oberseite angeordnete Befestigungsmittel vorgesehen sind, mittels derer das erste Adapterelement (34) gezielt an dem länglichen Element (3) festlegbar ist.

12. Reifenmontagemaschine (5) nach einem der vorhergehenden Ansprüche, **dadurch gekennzeichnet, dass** die Boden an der Oberseite und die bodenseitig angeordneten Befestigungsmittel mindestens eine diesbezügliche Verankerungsschraube (28, 30, 36, 36') umfassen, die in eine entsprechende, longitudinale oder transversale Gewindebohrung (29, 31; 37, 37') einschraubbar ist.

13. Reifenmontagemaschine nach einem der Ansprüche 1 bis 8, **dadurch gekennzeichnet, dass** das männliche Element (6) mit dem Werkzeug (2) koppelbar ist.

14. Reifenmontagemaschine (5) nach Anspruch 13, **dadurch gekennzeichnet, dass** das weibliche Element (7) an einem zweiten Adapterelement (41) gebildet ist, das einen hohlzylindrischen Abschnitt (42) umfasst, von dem ein komplementär geformter Endabschnitt (33) des länglichen Elements (3) aufgenommen werden kann.

15. Reifenmontagemaschine (5) nach Anspruch 14, **dadurch gekennzeichnet, dass** das männliche Element (6) an einem Verbindungselement (23) vorgesehen ist, das mit dem Werkzeug (2) koppelbar ist.

## Revendications

1. Machine (5) de démontage de pneus, du type ayant au moins un élément allongé (3) ayant un axe longitudinal (L) qui est mobile par rapport à une colonne stationnaire (4) pour monter/démonter un pneu sur/d'une jante, comprenant un raccord rapide (1) adapté pour monter/démonter des outils (2) sur le/du dit au moins un élément allongé (3), ledit raccord rapide (1) comprenant de plus au moins un élément mâle (6) et au moins un élément femelle (7), qui peuvent être respectivement couplés audit élément allongé (3) et à au moins l'un desdits outils (2) le long dudit axe longitudinal (L), ***caractérisée en ce que*** ledit élément mâle (6) et ledit au moins un élément femelle (7) ont des profils coniques et/ou tronconiques complémentaires.

2. Machine (5) de démontage de pneus selon la revendication 1, ***caractérisée en ce* qu'**elle comprend des moyens de serrage (8) afin de bloquer ensemble ledit élément mâle (6) et ledit élément femelle (7) dans une position axiale et angulaire prédéterminée par rapport audit axe longitudinal (L).

3. Machine (5) de démontage de pneus selon la revendication 1, ***caractérisée en ce que*** ledit élément mâle (6) comprend une portion allant en diminuant (9) qui possède un profil extérieur définissant ledit profil conique ou tronconique et qui est raccordée à une pièce de rallonge essentiellement cylindrique, longitudinale (10).

4. Machine (5) de démontage de pneus selon la revendication 3, ***caractérisée en ce que*** ledit élément femelle (7) possède un profil intérieur (11) définissant ledit profil conique ou tronconique et comprend, à une extrémité allant en diminuant (12), une cavité longitudinale (13) apte à recevoir ladite pièce de rallonge (10) dudit élément mâle (6).

5. Machine (5) de démontage de pneus selon la revendication 4, ***caractérisée en ce que*** lesdits moyens de serrage (8) comprennent une clé sensiblement cylindrique (14) qui est insérable dans un trou transversal (15) dudit élément femelle (7) et peut être engagée de manière sélective dans une cavité dudit élément mâle (6) afin de bloquer sélectivement ledit élément femelle (7) par rapport audit élément mâle (6).

6. Machine (5) de démontage de pneus selon la revendication 5, ***caractérisée en ce que*** ladite cavité (17) est située dans ladite pièce de rallonge (10), ladite clé cylindrique (14) comprenant une portion excentrique (18) apte à être engagée de manière sélective par rotation dans ladite cavité (17) lorsque ladite cavité se trouve à l'intérieur de ladite cavité longitudinale (13).

7. Machine (5) de démontage de pneus selon la revendication 6, ***caractérisée en ce que*** lesdits moyens de serrage (8) comprennent des moyens (19) pour bloquer la rotation de ladite clé cylindrique (14).

8. Machine (5) de démontage de pneus selon la revendication 1, ***caractérisée en ce que*** lesdits moyens (19) de blocage comprennent au moins un goujon (20) qui peut être vissé dans un siège fileté correspondant (21) dudit élément femelle (7) afin d'influer de manière sélective sur ladite clé cylindrique (14).

9. Machine (5) de démontage de pneus selon l'une ou plusieurs des revendications 1 à *8, **caractérisée en ce que*** ledit élément mâle (6) forme une seule pièce avec l'élément allongé (3).

10. Machine (5) de démontage de pneus selon l'une ou plusieurs des revendications 1 à *8, **caractérisée en ce que*** ledit élément femelle (7) comprend une saillie (25) qui peut être couplée à un siège complémentaire (26) d'un outil (2), des moyens de fixation inférieurs étant prévus pour bloquer ensemble de manière sélective ledit élément femelle et l'outil (2).

11. Machine (5) de démontage de pneus selon l'une ou plusieurs des revendications 1 à *8, **caractérisée en ce que*** ledit élément mâle (6) est formé sur un premier élément adaptateur (34) qui présente une chambre cylindrique (35) apte à être couplée avec l'élément allongé (3), des moyens de fixation supérieurs étant prévus afin de bloquer de manière sélective ledit premier élément adaptateur (34) et l'élément allongé (3).

12. Machine (5) de démontage de pneus selon l'une ou plusieurs des revendications précédentes, ***caractérisée en ce que*** lesdits moyens de fixation supérieurs et inférieurs comprennent au moins une vis d'ancrage respective (28, 30, 36, 36') qui peut être vissée dans un trou fileté longitudinal ou transversal correspondant (29, 31, 37, 37').

13. Machine (5) de démontage de pneus selon l'une ou plusieurs des revendications 1 à *8, **caractérisée en ce que*** ledit élément mâle (6) peut être couplé à l'outil (2).

14. Machine (5) de démontage de pneus selon la revendication 13, ***caractérisée en ce que*** ledit élément femelle (7) est formé sur un deuxième élément adaptateur (41) comprenant une portion cylindrique creuse (42) apte à recevoir une portion terminale complémentaire (33) de l'élément allongé (3).

15. Machine (5) de démontage de pneus selon la revendication 14, ***caractérisée en ce que*** ledit élément mâle (6) est formé sur un élément de connexion (43) qui peut être couplé à l'outil (2).
